# EUROPÄISCHE PATENTSCHRIFT

(11) **EP 1 244 580 B1**
(45) Veröffentlichungstag und Bekanntmachung des Hinweises auf die Patenterteilung: **29.06.2005**
(21) Anmeldenummer: 01982147.9
(22) Anmeldetag: 26.09.2001
(51) Int. Cl.: B60S 1/08, H01H 19/58

(54) **KONTAKTSCHEIBENSYSTEM UND VERFAHREN ZUM STEUERN EINES SCHEIBENWISCHERMOTORS**
CONTACT WASHER SYSTEM AND METHOD FOR CONTROLLING A WINDSCREEN WIPER MOTOR
SYSTEME DE DISQUE DE CONTACT ET PROCEDE POUR COMMANDER UN MOTEUR D'ESSUIE-GLACE

(30) Priorität: 28.10.2000 DE 10053688
(43) Veröffentlichungstag der Anmeldung: 02.10.2002
(73) Patentinhaber: ROBERT BOSCH GMBH, 70442 Stuttgart (DE)
(72) Erfinder: BOHN, Roland, 77815 Buehl (DE)
(86) Internationale Anmeldenummer: PCT/DE2001/003695
(87) Internationale Veröffentlichungsnummer: WO 2002/034587

(56) Entgegenhaltungen:
- GB-A- 2 313 452
- US-A- 4 700 026
- PATENT ABSTRACTS OF JAPAN vol. 1998, no. 02, 30. Januar 1998 (1998-01-30) & JP 09 277908 A (ICHIKOH IND LTD), 28. Oktober 1997 (1997-10-28)
- PATENT ABSTRACTS OF JAPAN vol. 2000, no. 07, 29. September 2000 (2000-09-29) & JP 2000 118360 A (JIDOSHA DENKI KOGYO CO LTD), 25. April 2000 (2000-04-25)

## Beschreibung

Die Erfindung betrifft ein Kontaktscheibensystem mit einer drehbaren Kontaktscheibe und mehreren Kontaktelementen, wobei die Kontaktscheibe mehrere Bahnen aufweist und jedes Kontaktelement einer Bahn zugeordnet ist. Die Erfindung betrifft ferner ein Verfahren zum steuern eines Scheibenwischermotors unter Verwendung eines Kontaktscheibensystems mit einer drehbaren Kontaktscheibe und mehreren Kontaktelementen, wobei die Kontaktscheibe mehrere Bahnen aufweist und jedes Kontaktelement einer Bahn zugeordnet ist. Weiterhin betrifft die Erfindung einen Scheibenwischermotor, welcher ein Kontaktscheibensystem mit einer drehbaren Kontaktscheibe und mehreren Kontaktelementen umfasst, wobei die Kontaktscheibe mehrere Bahnen aufweist und jedes Kontaktelement einer Bahn zugeordnet ist.

### Stand der Technik

Scheibenwischervorrichtungen mit gattungsgemäßen Kontaktscheibensystemen sowie gattungsgemäße Verfahren zum Steuern von Scheibenwischermotoren sind insbesondere zur Reinigung von Kraftfahrzeugscheiben bekannt. Üblicherweise werden die Scheibenwischervorrichtungen durch einen Schalter bedient, welcher sich im Inneren des Kraftfahrzeuges befindet, wobei dieser Schalter meist als Lenkstockschalter ausgelegt ist. Durch Umlegen des Lenkstockschalters kann die Scheibenwischervorrichtung von einem ausgeschalteten Zustand in mindestens einen Betriebszustand überführt werden. Meist sind Betriebszustände mit mehreren Scheibenwischergeschwindigkeiten und eine Intervallschaltung realisiert.

Um sicherzustellen, dass die Scheibenwischer nach dem Abschalten durch den Lenkstockschalter nicht in einer Zwischenstellung stehenbleiben sondern ordnungsgemäß in die Parkstellung überführt werden ist es bekannt, Kontaktscheibensysteme zu verwenden. Durch derartige Kontaktscheibensysteme wird ein geschlossener Stromkreis, in welchem sich der Scheibenwischermotor befindet, aufrechterhalten, bis die Scheibenwischer die Parkstellung erreicht haben.

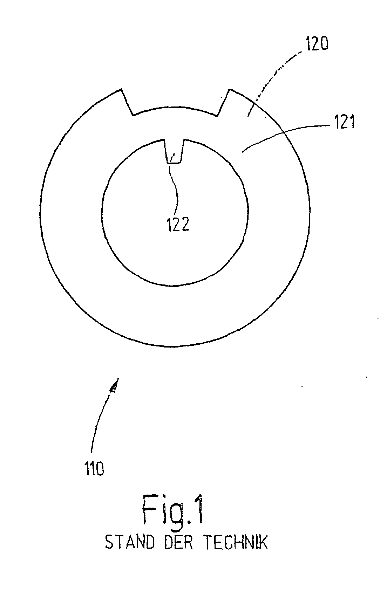

In Figur 1 ist eine Kontaktscheibe 110 dargestellt, welche in einem Kontaktscheibensystem des Standes der Technik verwendet wird. Eine derartige Kontaktscheibe 110 wird in gattungsgemäßen Scheibenwischermotoren so installiert, dass sie sich synchron mit dem Scheibenwischermotor dreht. Die Kontaktscheibe 110 stellt einen Kontakt zu drei Kontaktelementen her, welche jeweils auf einer Bahn der Kontaktscheibe 110 gleiten. Ein erstes Kontaktelement gleitet auf der äußeren Bahn 120, welche eine Unterbrechung aufweist. Ein zweites Kontaktelement gleitet auf der inneren Bahn 122, welche als kurze Bahn realisiert ist, und ein drittes Kontaktelement gleitet auf einer mittleren Bahn 121, welche durchgängig ist. Mit einer derartigen Konstruktion ist es möglich, dass in allen Motorstellungen, außer in der Endstellung und in einem Annäherungsbereich an die Endstellung ein Stromfluss aufrechterhalten wird. Dies wird dadurch erreicht, dass ein Kontaktelement, welches mit dem Pluspol der Batterie verbunden ist, auf der äußeren Bahn 120 gleitet. Ein Kontaktelement, das auf der mittleren Bahn 121 gleitet steht mit dem Wischermotor in Verbindung. Ein Stromfluss vom Pluspol der Batterie zum Wischermotor ist also solange möglich, wie das erste Kontaktelement auf einem leitenden Bereich der äußeren Bahn 120 gleitet. Erst wenn sich die Kontaktscheibe 110 soweit gedreht hat, dass sich das Kontaktelement in der Unterbrechung der äußeren Bahn 120 befindet, wird der Stromfluss unterbrochen. Aufgrund der Trägheit des Motors dreht sich die Kontaktscheibe dann trotz des unterbrochenen Stromflusses noch weiter. Diese Weiterdrehung wird allerdings dann beendet, wenn der leitende Bereich der kurzen inneren Bahn 122 mit einem Kontaktelement in Verbindung tritt. Dieses Kontaktelement ist so geschaltet, dass der Motor kurzgeschlossen und auf diese Weise aktiv gebremst wird.

Aufgrund der drei Bahnen der Kontaktscheibe des Standes der Technik hat diese eine gewisse Mindestbaugröße. Bei Scheibenwischermotoren ist man jedoch bestrebt, eine möglichst geringe Gesamtbaugröße zu erreichen, insbesondere also auch eine geringere Größe der Kontaktscheibe. Eine geringere Größe der Kontaktscheibe hätte weiterhin Vorteile bei der Herstellung von Scheibenwischermotoren, insbesondere bei Heckwischermotoren mit Pendelgetriebe, wo es derzeit notwendig ist, die Kontaktscheibe mit der Kontaktierung auf der gegenüberliegenden Seite bezüglich des Pendelgetriebes anzubringen. Aus diesem Grund muss derzeit der Scheibenwischermotor während der Montage auf dem Montageband gedreht werden, was den Herstellungsprozess aufwendig macht.

GB-A-2 313 452 zeigt eine Kontaktscheibe mit zwei Bohnen.

### Vorteile der Erfindung

Die Erfindung baut auf dem gattungsgemäßen Kontaktscheibensystem dadurch auf, dass die Kontaktscheibe zwei Bahnen aufweist und dass sich zwei ausgewählte Kontaktelemente der mehreren Kontaktelemente stets auf demselben elektrischen Potential befinden und auf derselben Bahn gleiten. Auf diese Weise ist es auch mit einer zweibahnigen Kontaktscheibe möglich, einen elektrischen Stromfluss bis zum Erreichen der Parkstellung der Scheibenwischer beziehungsweise bis kurz vor dem Erreichen der Parkstellung aufrechtzuerhalten. Dadurch, dass die Kontaktscheibe mit zwei Bahnen auskommt, hat sie eine geringere Baugröße beziehungsweise radiale Baubreite, was vorteile im Hinblick auf die gesamte Baugröße des Scheibenwischermotors und im Hinblick auf den Fertigungsprozess mit sich bringt.

Vorzugsweise gleiten die ausgewählten Kontaktelemente auf einer ersten Bahn, welche einen elektrisch leitenden und einen elektrisch isolierenden Bereich aufweist, und zumindest ein Kontaktelement der ausgewählten Kontaktelemente ist mit dem elektrisch leitenden Bereich verbunden. Wird der Scheibenwischermotor durch Umlegen des Lenkstockschalters abgeschaltet, so wird über wenigstens eines der ausgewählten Kontaktelemente eine elektrische Verbindung zum Wischermotor aufrechterhalten, da immer mindestens eines der ausgewählten Kontaktelemente mit dem elektrisch leitenden Bereich der ersten Bahn in Verbindung steht.

Bevorzugt ist der elektrisch isolierende Bereich der ersten Bahn durch eine Unterbrechung einer leitenden Bahn realisiert, und die ausgewählten Kontaktelemente weisen einen Abstand auf, welcher größer ist als die Unterbrechung der ersten Bahn. Bei einer kreisförmigen Kontaktscheibe kann der elektrisch isolierende Bereich folglich durch einen Ausschnitt mit radial verlaufenden Begrenzungen realisiert werden. Ist der Öffnungswinkel dieser Unterbrechung geringer als der Abstandswinkel der ausgewählten Kontaktelemente, so wird auf diese Weise sichergestellt, dass sich stets eines der ausgewählten Kontaktelemente in Verbindung mit dem elektrisch leitenden Bereich der ersten Bahn befindet.

Besonders bevorzugt ist es, wenn auf der ersten Bahn ein erstes weiteres Kontaktelement gleitet. Dieses erste weitere Kontaktelement dient dazu, eine elektrische Verbindung zwischen der Kontaktscheibe und dem Pluspol der Fahrzeugbatterie aufrechtzuerhalten. Somit wird auch dann, wenn der Lenkstockschalter in der ausgeschalteten Stellung ist, eine elektrische Verbindung über das erste weitere Kontaktelement und mindestens eines der ausgewählten Kontaktelemente zwischen dem Pluspol der Batterie und dem Motor aufrechterhalten. Erst wenn das erste weitere Kontaktelement den elektrisch leitenden Bereich der ersten Bahn verlässt und sich im isolierenden Bereich der ersten Bahn befindet, wird der Stromfluss unterbrochen.

Es ist besonders vorteilhaft, wenn eine zweite Bahn einen elektrisch isolierenden Bereich und einen elektrisch leitenden Bereich aufweist und wenn auf der zweiten Bahn ein zweites weiteres Kontaktelement gleitet. Dieses Kontaktelement dient dazu, einen elektrischen Kurzschluss des Motors zu realisieren und den Motor dadurch beim Erreichen der Parkstellung aktiv zu bremsen.

Vorzugsweise sind die Unterbrechung der ersten Bahn, der elektrisch leitende Bereich der zweiten Bahn, das erste weitere Kontaktelement und das zweite weitere Kontaktelement so zueinander angeordnet, dass ein Zustand existiert, bei dem weder das erste weitere Kontaktelement noch das zweite weitere Kontaktelement mit einem elektrisch leitenden Bereich der ersten Bahn beziehungsweise der zweiten Bahn verbunden sind. In diesem Zustand ist der Stromfluss im Stromkreis des Scheibenwischermotors zwar bereits unterbrochen. Der Motor und die Kontaktscheibe drehen sich allerdings aufgrund ihrer Trägheit noch weiter. Während dieser Phase verringert sich die Drehzahl des Motors, und erst wenn das zweite weitere Kontaktelement mit dem elektrisch leitenden Bereich der zweiten Bahn in Verbindung tritt findet aufgrund des elektrischen Kurzschlusses eine aktive Abbremsung des Motors statt.

Besonders nützlich ist es, wenn der Winkelbereich, welcher von dem elektrisch leitenden Bereich der zweiten Bahn überdeckt wird, kleiner ist als der Winkelbereich, welcher von dem elektrisch isolierenden Bereich der ersten Bahn überdeckt wird. Hierdurch ist es möglich, dass das erste weitere Kontaktelement aufgrund der Drehung der Kontaktscheibe bereits den leitenden Bereich der ersten Bahn verlassen hat, während das zweite weitere Kontaktelement den leitenden Bereich der zweiten Bahn noch nicht erreicht hat. In diesem Zwischenzustand findet also weder ein Antrieb des Motors noch ein aktives Abbremsen des Motors statt. Der Motor dreht sich aufgrund seiner Trägheit weiter, wobei die Drehzahl allerdings geringer wird. Erst wenn der elektrisch leitende Bereich der zweiten Bahn mit dem zweiten weiteren Kontaktelement in Verbindung tritt wird der Motor endgültig gebremst.

Vorzugsweise sind die Kontaktelemente Kontaktfedern. Auf diese Weise wird ein sicherer Kontakt zwischen der Kontaktscheibe und den Kontaktelementen hergestellt.

Die Erfindung baut auf dem gattungsgemäßen Verfahren dadurch auf, dass zum Steuern eines Scheibenwischermotors ein erfindungsgemäßes Kontaktscheibensystem verwendet wird. Auf diese Weise werden die Vorteile des erfindungsgemäßen Kontaktscheibensystems durch ein Steuerungsverfahren umgesetzt.

Besonders vorteilhaft ist es, wenn bei dem erfindungsgemäßen Verfahren ein mit dem Kontaktscheibensystem in Verbindung stehender Schalter umgelegt wird und wenn eine Rotation der Kontaktscheibe aufrechterhalten wird, bis das zweite weitere Kontaktelement mit dem elektrisch leitenden Bereich der zweiten Bahn verbunden wird. Das Steuerungsverfahren ermöglicht also in vorteilhafter Weise eine sichere Überführung der Scheibenwischer von einer Betriebsstellung in eine Parkstellung.

Dabei ist es besonders vorteilhaft, wenn vor dem Verbinden des zweiten weiteren Kontaktelementes mit dem elektrisch leitenden Bereich der zweiten Bahn die Verbindung des ersten weiteren Kontaktelementes mit dem elektrisch leitenden Bereich der ersten Bahn unterbrochen wird. Während des so hergestellten Zwischenzustands ist die elektrische Verbindung des Motors und der Batterie zwar bereits unterbrochen. Es findet aber noch eine Drehung aufgrund der Trägheit der beteiligten Komponenten statt, wobei sich allerdings die Drehzahl des Motors verlangsamt. Erst wenn das zweite weitere Kontaktelement mit dem elektrisch leitenden Bereich der zweiten Bahn in Kontakt tritt, erfolgt ein aktives Abbremsen des Motors.

Die Erfindung baut auf dem gattungsgemäßen Scheibenwischermotor dadurch auf, dass er eine erfindungsgemäße Kontaktscheibe aufweist. Damit setzt der Scheibenwischermotor alle vorteile der erfindungsgemäßen Kontaktscheibe und des erfindungsgemäßen Verfahrens um. Besonders vorteilhaft ist, dass ein Scheibenwischermotor mit reduzierter Baugröße herstellbar ist.

Der Erfindung liegt die überraschende Erkenntnis zugrunde, dass es aufgrund einer geeigneten Anordnung von Kontaktelementen und einer geeigneten geometrischen Gestaltung einer Kontaktscheibe möglich ist, die Funktionen einer dreibahnigen Kontaktscheibe, wie sie in Scheibenwischermotoren des Standes der Technik verwendet wird, auch mit einer zweibahnigen Kontaktscheibe zu ermöglichen. Daher können erfindungsgemäße Scheibenwischermotoren mit geringerer Baugröße hergestellt werden. Insbesondere kann der Fertigungsprozess vereinfacht werden, da kein Drehen des Motors auf den Werkstückträgern des Montagebandes mehr erforderlich ist.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine Kontaktscheibe des Standes der Technik;
- Figur 2: ein erfindungsgemäßes Kontaktscheibensystem;
- Figur 3: eine elektrische Schaltung mit einem erfindungsgemäßen Kontaktscheibensystem in einem eingeschalteten Zustand;
- Figur 4: ein Ersatzschaltbild der Schaltung gemäß Figur 3;
- Figur 5: eine elektrische Schaltung mit einem erfindungsgemäßen Kontaktscheibensystem in einem ersten Zwischenzustand;
- Figur 6: eine elektrische Schaltung mit einem erfindungsgemäßen Kontaktscheibensystem in einem zweiten Zwischenzustand;
- Figur 7: eine elektrische Schaltung eines erfindungsgemäßen Kontaktscheibensystems in einem dritten Zwischenzustand;
- Figur 8: ein Ersatzschaltbild der Schaltungen gemäß den Figuren 5 bis 7;
- Figur 9: eine elektrische Schaltung mit einem erfindungsgemäßen Kontaktscheibensystem in einem vierten Zwischenzustand;
- Figur 10: ein Ersatzschaltbild der Schaltung gemäß Figur 9;
- Figur 11: eine elektrische Schaltung mit einem erfindungsgemäßen Kontaktscheibensystem in einem ausgeschalteten Zustand; und
- Figur 12: ein Ersatzschaltbild der Schaltung gemäß Figur 11.

### Beschreibung der Ausführungsbeispiele

In der nachfolgenden Beschreibung der Zeichnungen sind gleiche Elemente mit gleichen Bezugszeichen gekennzeichnet.

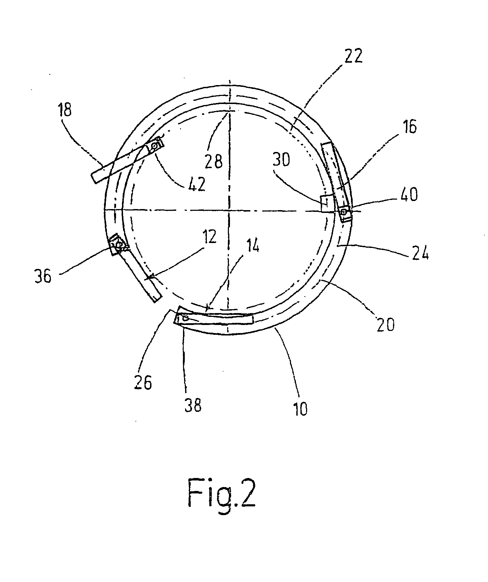

Figur 2 zeigt ein erfindungsgemäßes Kontaktscheibensystem in einer Draufsicht. Das Kontaktscheibensystem umfasst eine Kontaktscheibe 10 und mehrere Kontaktelemente 12, 14, 16, 18. Die Kontaktelemente 12, 14, 16, 18 sind als Kontaktfedern ausgelegt. Die Kontaktscheibe 10 hat zwei Bahnen 20, 22. Die erste Bahn 20 hat einen relativ langen elektrisch leitenden Bereich 24 und einen vergleichsweise kurzen elektrisch isolierenden Bereich 26, welcher durch eine Unterbrechung der Bahn 20 realisiert ist. Die erste Bahn 20 liegt in radialer Richtung außerhalb der zweiten Bahn 22. Diese zweite Bahn 22 hat einen relativ langen elektrisch isolierenden Bereich 28 und einen vergleichsweise kurzen elektrisch leitenden Bereich 30. Der elektrisch leitende Bereich 30 ist als kurzes Ansatzstück an dem elektrisch leitenden Bereich 24 der ersten Bahn 20 realisiert. Zwei Kontaktelemente 12, 14 der mehreren Kontaktelemente 12, 14, 16, 18, welche als ausgewählte Kontaktelemente 12, 14 bezeichnet werden, weisen bezüglich ihrer Kontaktstellen 36, 38 einen Abstandswinkel auf, welcher größer ist als die Unterbrechung 26 der ersten Bahn 20. Auf diese Weise steht stets mindestens eines der Kontaktelemente 12, 14 mit dem elektrisch leitenden Bereich 24 der ersten Bahn 20 in Verbindung. Das erste weitere Kontaktelement 16 gleitet auf der ersten Bahn 20. Das zweite weitere Kontaktelement 18 gleitet auf der zweiten Bahn 22. Der Winkelbereich, welcher von der Unterbrechung 26 der ersten Bahn 20 überdeckt wird, ist größer als der Winkelbereich, welcher von dem elektrisch leitenden Bereich 30 der zweiten Bahn überdeckt wird. Die Kontaktstelle 40 des ersten weiteren Kontaktelementes 16 und die Kontaktstelle 42 des zweiten weiteren Kontaktelementes 18 sowie die Unterbrechung 26 der ersten Bahn 20 und der elektrisch leitende Bereich 30 der zweiten Bahn 22 sind so zueinander angeordnet, dass es einen Zustand gibt, bei dem weder das erste weitere Kontaktelement 16 noch das zweite weitere Kontaktelement 18 mit ihren jeweiligen Bahnen in Verbindung stehen. Ebenfalls ist die Anordnung des ersten weiteren Kontaktelementes 16 und des zweiten weiteren Kontaktelementes 18 und der Unterbrechung 26 der ersten Bahn 20 und des elektrisch leitenden Bereiches 30 der zweiten Bahn 22 so gewählt, dass ein Zustand existiert, bei dem das zweite weitere Kontaktelement 18 mit dem elektrisch leitenden Bereich 30 der zweiten Bahn 22 in Verbindung steht, während das erste weitere Kontaktelement 16 im elektrisch isolierenden Bereich 26 der ersten Bahn 20 liegt und somit keinen elektrischen Kontakt zur Kontaktscheibe 10 hat.

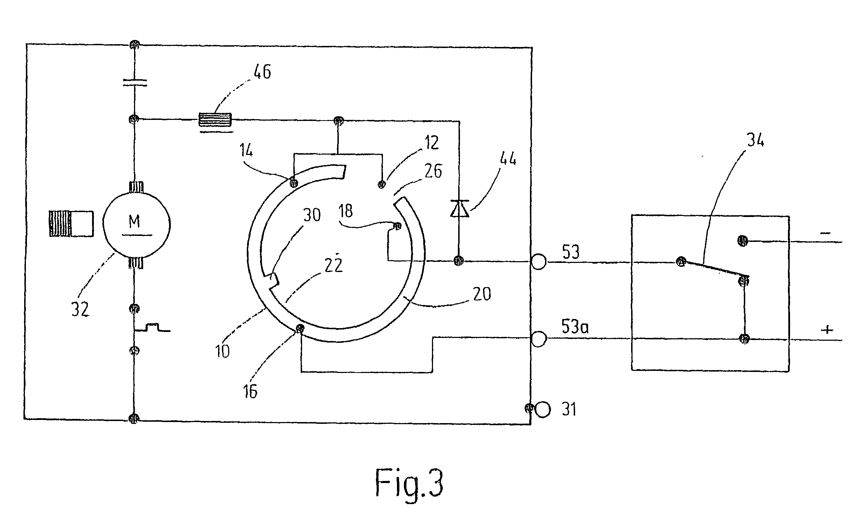

Figur 3 zeigt eine elektrische Schaltung mit einem erfindungsgemäßen Kontaktscheibensystem in einem eingeschalteten Zustand. Ein Schalter 34, welcher im Allgemeinen als Lenkstockschalter ausgebildet ist, stellt eine Verbindung zwischen der Klemme 53 und dem Pluspol der Fahrzeugbatterie her. Auf diese Weise liegt über die Klemme 53, eine Verpolschutzdiode 44 und eine Spule 46 das positive Potential an dem Motor 32 an. Dies ist unabhängig von der Stellung der Kontaktscheibe 10 bezüglich der Kontaktelemente 12, 14, 16, 18, wobei vorliegend eine willkürliche Momentaufnahme der sich synchron mit dem Motor 32 drehenden Kontaktscheibe 10 dargestellt ist.

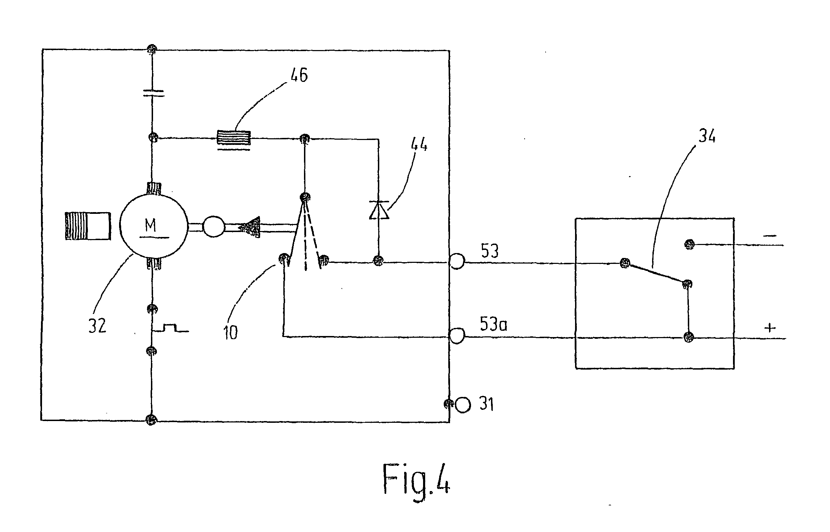

Figur 4 zeigt ein Ersatzschaltbild der Schaltung gemäß Figur 3. Es ist dargestellt, dass die Klemme 53 stets über den Schalter 34 auf positivem Potential liegt. Die Kontaktscheibe 10, welche durch einen von dem Motor 32 betätigten Schalter symbolisiert ist, wechselt zwischen mehreren Schaltzuständen, wobei zu gewissen Zeiten eine zusätzliche Verbindung des Motors 32 mit dem Pluspol über die Klemme 53a existiert. Dies ist durch die durchgezogene Linie bei der symbolischen Darstellung der Kontaktscheibe 10 symbolisiert. Zu anderen Zeiten ist eine zusätzliche Verbindung des Motors 32 mit der Klemme 53 vorgesehen. Dies ist durch die rechte unterbrochene Linie der symbolischen Darstellung der Kontaktscheibe 10 gezeigt. Ebenfalls gibt es einen Zustand, bei dem die Kontaktscheibe 10 keine weitere Verbindung des Motors 32 zu einer der Klemmen 53, 53a herstellt, was durch die mittlere unterbrochene Linie der symbolisch dargestellten Kontaktscheibe 10 veranschaulicht ist. Unabhängig von den Schaltzuständen der Kontaktscheibe 10 liegt in dem eingeschalteten Zustand, das heißt in dem Zustand, bei dem der Schalter 34 eine Verbindung mit dem Pluspol herstellt, ein positives Potential über die Spule 46 an dem Motor 32 an.

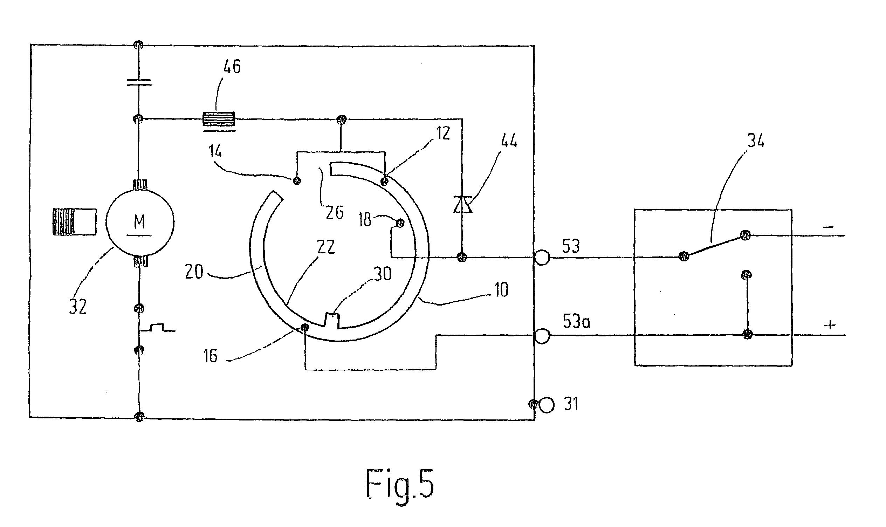

Figur 5 zeigt eine elektrische Schaltung mit einem erfindungsgemäßen Kontaktscheibensystem in einem ersten Zwischenzustand. Zum Abschalten des Scheibenwischers ist der Schalter 34 umgelegt worden, so dass nunmehr durch den Schalter 34 eine Verbindung zu dem Minuspol der Batterie vorliegt. Allerdings wird dem Motor 32 nach wie vor das positive Potential über die Klemme 53a, das Kontaktelement 16, die Kontaktscheibe 10 und das Kontaktelement 12 zugeführt. Bei der in Figur 5 dargestellten Momentaufnahme befindet sich das Kontaktelement 14 in dem elektrisch isolierenden Bereich der ersten Bahn 20 der Kontaktscheibe 10. Da der Abstand zwischen den ausgewählten Kontaktelementen 12, 14 größer ist als die Unterbrechung 26 der ersten Bahn 20 des Kontaktelementes 10, wird stets eine Verbindung von der Kontaktscheibe 10 zu dem Motor 32 aufrechterhalten. Das zweite weitere Kontaktelement 18, welches über die Klemme 53 auf negativem Potential ist, steht nicht mit der Kontaktscheibe in Verbindung, da es sich im elektrisch isolierenden Bereich der zweiten Bahn 22 befindet.

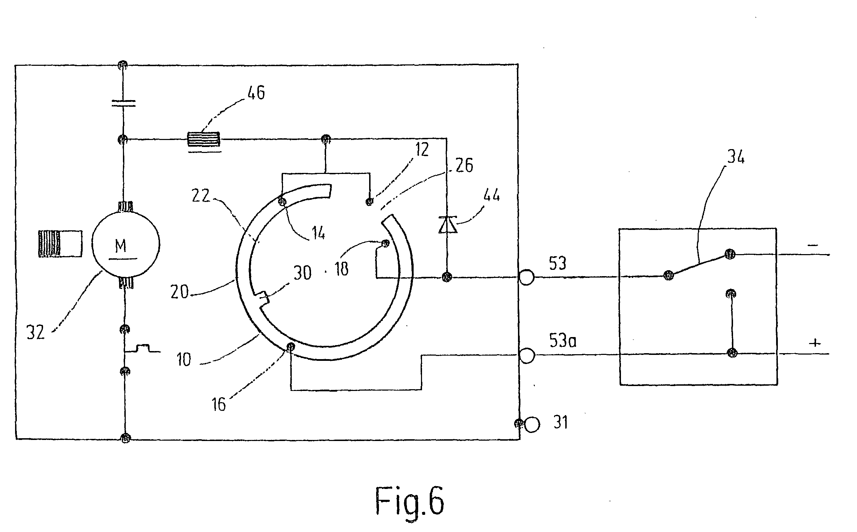

Figur 6 zeigt eine elektrische Schaltung mit einem erfindungsgemäßen Kontaktscheibensystem in einem zweiten Zwischenzustand. Dieser zweite Zwischenzustand entspricht dem ersten Zwischenzustand gemäß Figur 5, abgesehen davon, dass der Kontakt des Pluspols nunmehr über das andere ausgewählte Kontaktelement 14 hergestellt wird.

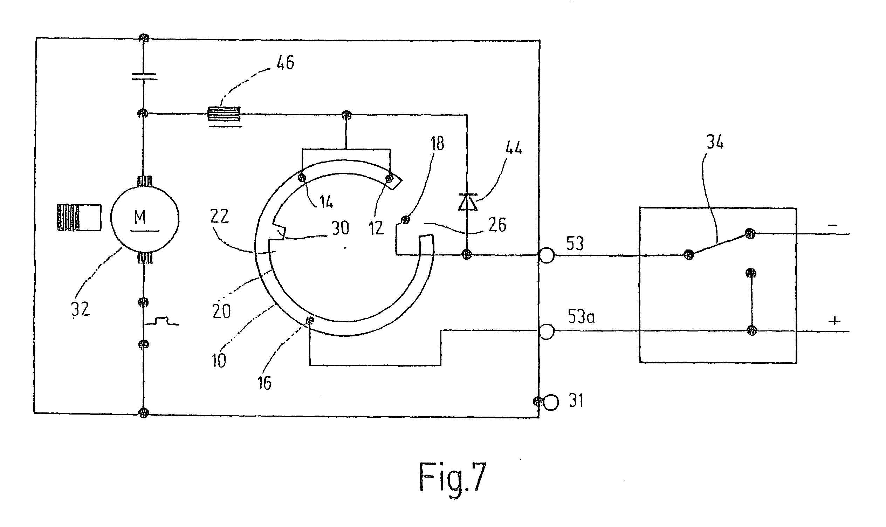

Figur 7 zeigt eine elektrische Schaltung mit einem erfindungsgemäßen Kontaktscheibensystem in einem dritten Zwischenzustand. Auch dieser dritte Zwischenzustand entspricht dem ersten Zwischenzustand gemäß Figur 5 und dem zweiten Zwischenzustand gemäß Figur 6, außer dass die Verbindung zwischen dem Pluspol und dem Motor 32 bei der Momentaufnahme gemäß Figur 7 durch beide ausgewählte Kontaktelemente 12, 14 aufrechterhalten wird.

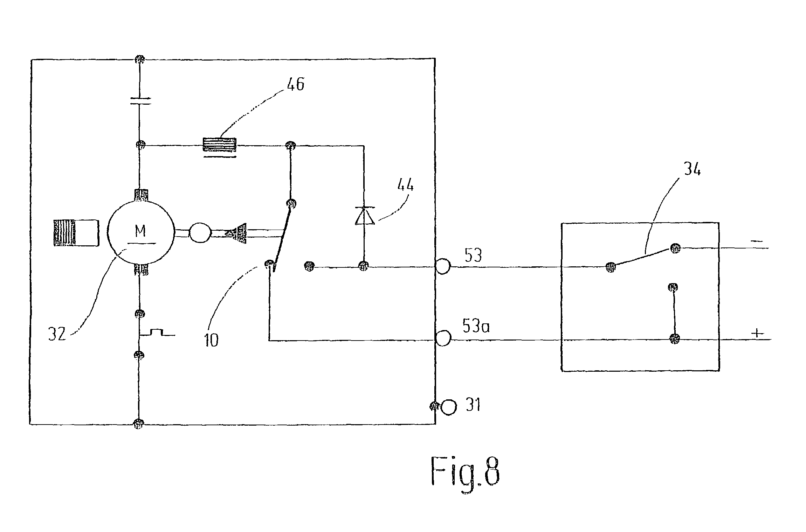

Figur 8 zeigt ein Ersatzschaltbild der Schaltungen gemäß den Figuren 5 bis 7. Bei allen Zuständen steht der Pluspol über die Klemme 53a mit dem Motor in Verbindung, so dass dessen Betrieb aufrechterhairen wird.

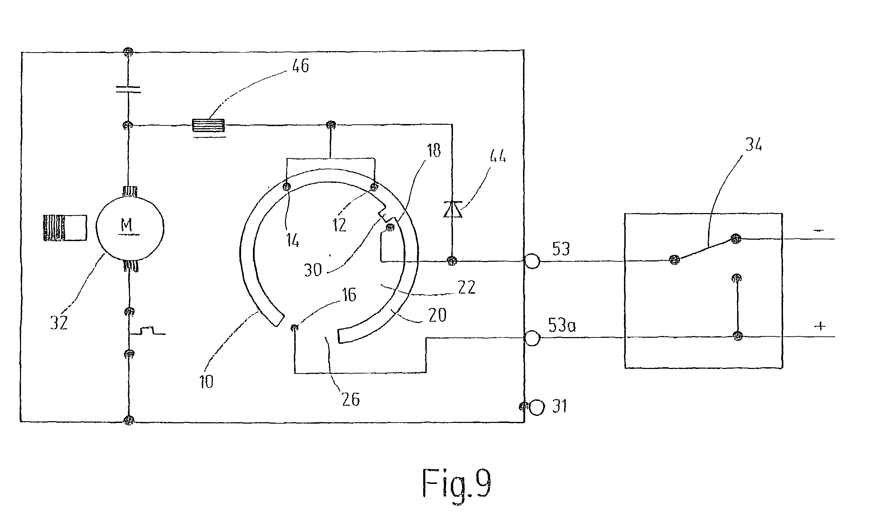

Figur 9 zeigt eine elektrische Schaltung mit einem erfindungsgemäßen Kontaktscheibensystem in einem vierten Zwischenzustand. Dieser vierte Zwischenzustand unterscheidet sich elektrisch von dem ersten Zwischenzustand, dem zweiten Zwischenzustand und dem dritten Zwischenzustand. Bei dem vierten Zwischenzustand gemäß Figur 9 befindet sich das erste weitere Kontaktelement 16 im elektrisch isolierenden Bereich 26 der ersten Bahn 20. Daher liegt das positive Potential nicht mehr an den ausgewählten Kontaktelementen 12, 14 an, so dass auch keine Spannung mehr an dem Motor 32 anliegt. Das zweite weitere Kontaktelement 18 befindet sich im elektrisch isolierenden Bereich der zweiten Bahn 22, jedoch kurz vor der Kontaktierung des elektrisch leitenden Bereichs. Ausgehend von dem Zustand gemäß Figur 9 erfolgt eine weitere Drehung der Kontaktscheibe aufgrund der Trägheit der beteiligten Komponenten.

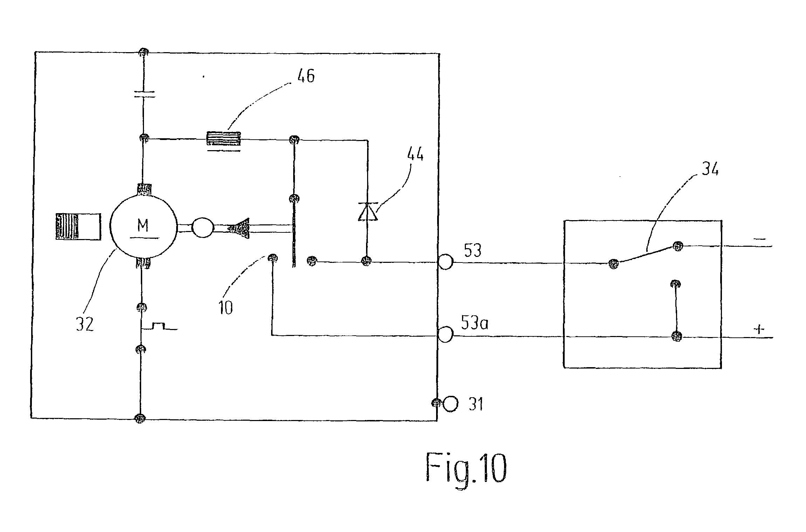

Figur 10 zeigt ein Ersatzschaltbild der Schaltung gemäß Figur 9. Es ist dargestellt, dass weder die Klemme 53a noch die Klemme 53 mit dem Motor in Verbindung stehen. Dies bedeutet, dass weder ein positives Potential für den Normalbetrieb des Motors 32 anliegt. Ebenfalls liegt kein negatives Potential an dem Motor 32 an, was den Motor 32 kurzschließen wurde.

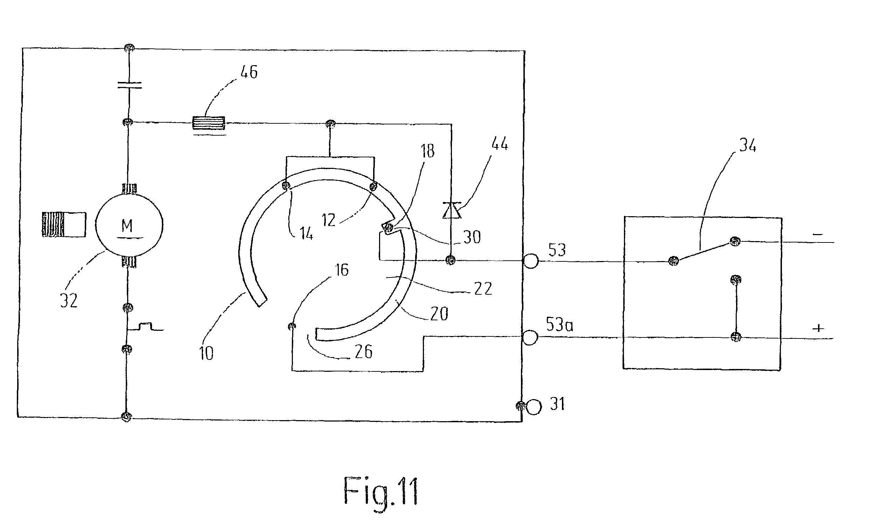

Figur 11 zeigt eine elektrische Schaltung mit einem erfindungsgemäßen Kontaktscheibensystem in einem ausgeschalteten Zustand. Entsprechend Figur 9 befindet sich auch hier das Kontaktelement 16 im elektrisch isolierenden Bereich 26 der Bahn 20. Anders als in Figur 9 befinder sich jedoch das Kontaktelement 13 bei der Momentaufnahme gemäß Figur 11 in dem elektrisch leitenden Bereich 30 der zweiten Bahn 22. Somit besteht eine Verbindung zwischen dem Minuspol und dem Motor über die Klemme 53 und das Kontaktelement 18. Der Motor 32 wird kurzgeschlossen und somit aktiv gebremst. Der Scheibenwischer befindet sich in Parkstellung.

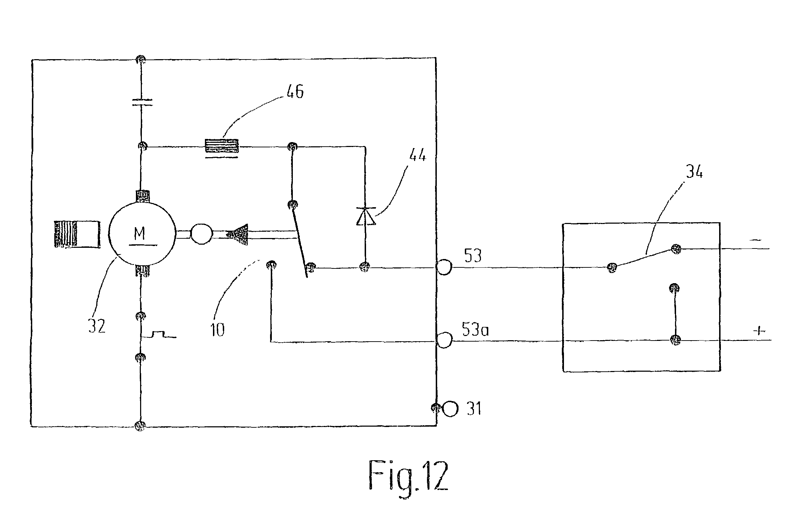

Figur 12 zeigt ein Ersatzschaltbild der Schaltung gemäß Figur 11. Es ist zu erkennen, dass der Schalter, welcher die Kontaktscheibe 10 symbolisiert eine Verbindung des Motors 32 mit dem Minuspol herstellt, so dass dieser kurzgeschlossen ist.

## Patentansprüche

1. Kontaktscheibensystem mit
- einer drehbaren Kontaktscheibe (10) und
- mehreren Kontaktelementen (12, 14, 25, 18),
- wobei die Kontaktscheibe (10) zwei Bahnen (20, 22) aufweist und jedes Kontaktelement (12, 14, 16, 18) einer Bahn (20, 22) zugeordnet ist,
**dadurch gekennzeichnet,**
**dass** sich zwei ausgewählte Kontaktelemente (12, 14) der mehreren Kontaktelemente (12, 14, 16, 18) stets auf demselben elektrischen Potential befinden und auf derselben Bahn (20) gleiten.

2. Kontaktscheibensystem nach Anspruch 1, **dadurch gekennzeichnet,**
- **dass** die ausgewählten Kontaktelemente (12, 14) auf einer ersten Bahn (20) gleiten, welche einen elektrisch leitenden Bereich (24) und einen elektrisch isolierenden Bereich (26) aufweist, und
- **dass** zumindest ein Kontaktelement (12, 14) der ausgewählten Kontaktelemente (12, 14) mit dem elektrisch leitenden Bereich (24) der ersten Bahn (20) verbunden ist.

3. Kontaktscheibensystem nach Anspruch 1 oder 2, **dadurch gekennzeichnet,**
- **dass** der elektrisch isolierende Bereich (26) der ersten Bahn (20) durch eine Unterbrechung eines elektrisch leitenden Bereichs (26) realisiert ist und
- **dass** die ausgewählten Kontaktelemente (12, 14) einen Abstand aufweisen, welcher größer ist als die Unterbrechung des elektrisch leitenden Bereichs (24).

4. Kontaktscheibensystem nach einem der vorangehenden Ansprüche, **dadurch gekennzeichnet, dass** auf der ersten Bahn (20) ein erstes weiteres Kontaktelement (16) gleitet.

5. Kontaktscheibensystem nach einem der vorangehenden Ansprüche, **dadurch gekennzeichnet,**
- **dass** eine zweite Bahn (22) einen elektrisch isolierenden Bereich (28) und einen elektrisch leitenden Bereich (30) aufweist und
- **dass** auf der zweiten Bahn (22) ein zweites weiteres Kontaktelement (18) gleitet.

6. Kontaktscheibensystem nach einem der vorangehenden Ansprüche, **dadurch gekennzeichnet, dass** die Unterbrechung (26) der ersten Bahn (20), der elektrisch leitende Bereich (30) der zweiten Bahn (22), das erste weitere Kontalaelement (16) und das zweite weitere Kontaktelement (18) so zueinander angeordnet sind, dass ein Zustand existiert, bei dem weder das erste weitere Kontaktelement (16) noch das zweite weitere Kontaktelement (18) mit einem elektrisch leitenden Bereich (24, 30) der ersten Bahn (20) beziehungsweise der zweiten Bahn (22) verbunden sind.

7. Kontaktscheibensystem nach einem der vorangehenden Ansprüche, **dadurch gekennzeichnet, dass** der Winkelbereich, welcher von dem elektrisch leitenden Bereich (30) der zweiten Bahn (22) überdeckt wird, kleiner ist als der Winkelbereich, welcher von dem elektrisch isolierenden Bereich (26) der ersten Bahn (20) überdeckt wird.

8. Kontaktscheibensystem nach einem der vorangehenden Ansprüche, **dadurch gekennzeichnet, dass** die Kontaktelemente (12, 14, 16, 18) Kontaktfedern sind.

9. Verfahren zum Steuern eines Scheibenwischermotors (32) unter Verwendung eines Kontaktscheibensystems nach einem der Ansprüche 1 bis 9.

10. Verfahren nach Anspruch 9, **dadurch gekennzeichnet,**
- **dass** ein mit dem Kontaktscheibensystem in Verbindung stehender Schalter (34) umgelegt wird und
- **dass** eine Rotation der Kontaktscheibe (10) aufrechterhalten wird, bis das zweite weitere Kontaktelement (18) mit dem elektrisch leitenden Bereich (30) der zweiten Bahn (22) verbunden wird.

11. Verfahren nach Anspruch 9 oder 10, **dadurch gekennzeichnet, dass** vor dem Verbinden des zweiten weiteren Kontaktelementes (18) mit dem elektrisch leitenden Bereich (30) der zweiten Bahn (22) die Verbindung des ersten weiteren Kontaktelementes (16) mit dem elektrisch leitenden Bereich (24) der ersten Bahn (20) unterbrochen wird.

12. Scheibenwischermotor mit einem Kontaktscheibensystem nach einem der Ansprüche 1 bis 9.

## Claims

1. Contact washer system having
- a rotatable contact washer (10) and
- a plurality of contact elements (12, 14, 16, 18),
- wherein the contact washer (10) has two tracks (20, 22) and each contact element (12, 14, 16, 18) is assigned to one track (20, 22),
**characterized**
**in that** two selected contact elements (12, 14) of the plurality of contact elements (12, 14, 16, 18) are always at the same electrical potential and slide on the same track (20).

2. Contact washer system according to Claim 1, **characterized**
- **in that** the selected contact elements (12, 14) slide on a first track (20) which has an electrically conductive region (24) and an electrically insulating region (26), and
- **in that** at least one contact element (12, 14) of the selected contact elements (12, 14) is connected to the electrically conductive region (24) of the first track (20).

3. Contact washer system according to Claim 1 or 2, **characterized**
- **in that** the electrically insulating region (26) of the first track (20) is implemented by interrupting an electrically conductive region (26), and
- **in that** the selected contact elements (12, 14) are at a distance which is greater than the interruption in the electrically conductive region (24).

4. Contact washer system according to one of the preceding claims, **characterized in that** a first further contact element (16) slides on the first track (20).

5. Contact washer system according to one of the preceding claims, **characterized**
- **in that** a second track (22) has an electrically insulating region (28) and an electrically conductive region (30), and
- **in that** a second further contact element (18) slides on the second track (22).

6. Contact washer system according to one of the preceding claims, **characterized in that** the interruption (26) in the first track (20), the electrically conductive region (30) of the second track (22), the first further contact element (16) and the second further contact element (18) are arranged with respect to one another in such a way that a state exists in which neither the first further contact element (16) nor the second further contact element (18) are connected to an electrically conductive region (24, 30) of the first track (20) or of the second track (22).

7. Contact washer system according to one of the preceding claims, **characterized in that** the angular region which is covered by the electrically conductive region (30) of the second track (22) is smaller than the angular region which is covered by the electrically conductive region (26) of the first track (20).

8. Contact washer system according to one of the preceding claims, **characterized in that** the contact elements (12, 14, 16, 18) are contact springs.

9. Method for controlling a windscreen wiper motor (32) using a contact washer system according to one of Claims 1 to 9.

10. Method according to Claim 9, **characterized**
- **in that** a switch (34) which is connected to the contact washer system is reversed, and
- **in that** a rotation of the contact washer (10) is continued until the second further contact element (18) is connected to the electrically conductive region (30) of the second track (22).

11. Method according to Claim 9 or 10, **characterized in that**, before the second further contact element (18) is connected to the electrically conductive region (30) of the second track (22), the connection of the first further contact element (16) to the electrically conductive region (24) of the first track (20) is interrupted.

12. Windscreen wiper motor having a contact washer system according to one of Claims 1 to 9.

## Revendications

1. Système de rondelles de contact comprenant :
- une branche de contact (10) tournante,
- plusieurs éléments de contact (12, 14, 16, 18),
- la rondelle de contact (10) présentant deux pistes (20, 22) et chaque élément de contact (12, 14, 16, 18) étant associé à une piste (20, 22),
**caractérisé en ce que**
deux éléments de contact (12, 14) sélectionnés des plusieurs éléments de contact (12, 14, 16, 18) se trouvent toujours au même potentiel électrique et glissent sur la même piste (20).

2. Système de rondelles de contact selon la revendication 1,
**caractérisé en ce que**
- les éléments de contact (12, 14) sélectionnés glissent sur une première piste (20) qui présente une région conductrice de l'électricité (24) et une région isolante de l'électricité (26), et
- au moins un élément de contact (12, 14) des éléments de contact (12, 14) sélectionnés est en contact avec la région conductrice de l'électricité (24) de la première piste (20).

3. Système de rondelles de contact selon la revendication 1ou 2,
**caractérisé en ce que**
- la région conductrice de l'électricité (26) de la première piste (20) est réalisée par une interruption d'une région conductrice de l'électricité (26), et
- les éléments de contact sélectionnés (12, 14) présentent une distance d'écartement mutuel qui est plus grande que l'interruption de la région conductrice de l'électricité (24).

4. Système de rondelles de contact selon une des revendications précédentes,
**caractérisé en ce qu'**
un premier des autres éléments de contact (16) glisse sur la première piste (20).

5. Système de rondelles de contact selon une des revendications précédentes,
**caractérisé en ce qu'**
- une deuxième piste (22) présente une région isolante de l'électricité (28) et une région conductrice de l'électricité (30), et
- un deuxième des autres éléments de contact (18) glisse sur la deuxième piste (22).

6. Système de rondelles de contact selon une des revendications précédentes,
**caractérisé en ce que**
l'interruption (26) de la première piste (20), la région conductrice de l'électricité (30) de la deuxième piste (22), le premier des autres éléments de contact (16) et le deuxième des autres éléments de contact (18) sont disposés l'un par rapport à l'autre de telle manière qu'il existe un état dans lequel ni le premier des autres éléments de contact (16) ni le deuxième des autres de contact (18) n'est en contact avec une région conductrice de l'électricité (24, 30) de la première piste (20) ou respectivement de la deuxième piste (22).

7. Système de rondelles de contact selon une des revendications précédentes,
**caractérisé en ce que**
la région angulaire qui est recouverte par la région conductrice de l'électricité (30) de la deuxième piste (22) est plus petite que la région angulaire qui est recouverte par la région isolante de l'électricité (26) de la première piste (20).

8. Système de rondelles de contact selon une des revendications précédentes,
**caractérisé en ce que**
les éléments de contact (12, 14, 16, 18) sont des ressorts de contact.

9. Procédé pour commander un moteur d'essuie-glace (32), utilisant un système de rondelles de contact selon une des revendications 1 à 9.

10. Procédé selon la revendication 9,
**caractérisé en ce qu'**
- un commutateur (34) connecté au système de rondelles de contact est inversé et
- une rotation de la rondelle de contact (10) est entretenue jusqu'à ce que le deuxième des autres éléments de contact (18) soit en contact avec la région conductrice de l'électricité (30) de la deuxième piste (22).

11. Procédé selon la revendication 9 ou 10,
**caractérisé en ce que**
le contact entre le premier des autres éléments de contact (16) et la région conductrice de l'électricité (24) de la première piste (20) est interrompu, avant la mise en contact du deuxième autre élément de contact (18) avec la région conductrice de l'électricité (30) de la deuxième piste (22).

12. Moteur d'essuie-glace muni d'un système de rondelle de contact selon une des revendications 1 à 9.
